(19) Europäisches Patentamt
European Patent Office
Office européen des brevets

(11) Veröffentlichungsnummer : **0 041 210**
**B1**

(12) **EUROPÄISCHE PATENTSCHRIFT**

(45) Veröffentlichungstag der Patentschrift : **09.01.85**

(51) Int. Cl.⁴ : **C 08 J 5/00**, B 01 J 13/02, A 01 N 25/28

(21) Anmeldenummer : **81103985.8**

(22) Anmeldetag : **23.05.81**

# (54) Verfahren zur Herstellung druckbeständiger Mikrokapseln mit einer Polyamid-Aussenhülle und einer durch Polyurethan-Polyharnstoff strukturierten Innenmasse.

(30) Priorität : **31.05.80 DE 3020781**

(43) Veröffentlichungstag der Anmeldung : **09.12.81 Patentblatt 81/49**

(45) Bekanntmachung des Hinweises auf die Patenterteilung : **09.01.85 Patentblatt 85/02**

(84) Benannte Vertragsstaaten : **AT BE CH DE FR GB IT LI NL**

(56) Entgegenhaltungen :
**DE-A- 2 226 941**
**DE-A- 2 307 247**
**DE-A- 2 757 017**
**FR-A- 1 427 085**
**US-A- 4 076 774**

(73) Patentinhaber : **HOECHST AKTIENGESELLSCHAFT**
**Postfach 80 03 20**
**D-6230 Frankfurt am Main 80 (DE)**

(72) Erfinder : **Heinrich, Rudolf, Dr.**
**Taunusstrasse 19**
**D-6233 Kelkheim (Taunus) (DE)**
Erfinder : **Frensch, Heinz, Dr.**
**Oestricher Weg 33**
**D-6000 Frankfurt am Main 71 (DE)**
Erfinder : **Albrecht, Konrad, Dr.**
**Sodener Strasse 64**
**D-6233 Kelkheim (Taunus) (DE)**

**EP 0 041 210 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur Herstellung von druckbeständigen Mikrokapseln mit einer aus Polyamid bestehenden Außenhülle, die als Kernmaterial eine mit Wasser nicht mischbare flüssige Phase und gegebenenfalls Wirkstoffe, vorzugsweise pestizide Wirkstoffe, in einer durch Polyurethan-Polyharnstoff strukturierten Innenmasse enthalten.

Die Technik der Mikroverkapselung gewann in den letzten Jahren zunehmend an Bedeutung, da es diese Methode ermöglicht, Stoffe unterschiedlicher Aggregatzustände in eine nichtreaktive Kapsel einzuschließen. Zahlreiche mechanische und chemische Verfahren zur Kapselherstellung wurden bereits beschrieben und angewandt (vgl. hierzu z. B. I. E. Vandegaer, « Microencapsulation », Plenum-Press, New York-London ; 1974). Hinsichtlich der Verwendung der Mikrokapseln als Träger für vielerlei verschiedene Stoffe, wie z. B. Tinten und Farbstoffe, Geruchs- oder Geschmacksstoffe, pharmazeutische Zubereitungen, chemische Reagenzien, usw., wurde auch schon mehrfach versucht, Pflanzenschutzmittel in Mikrokapseln einzusetzen.

Von besonderer Bedeutung ist z. B. die Verkapselung von toxischen Pflanzenschutzmitteln vom Standpunkt der Handhabungssicherheit. Ein weiterer Vorteil der Wirkstoffverkapselung liegt in der Kombinierbarkeit miteinander nicht mischbarer oder untereinander unverträglicher Wirkstoffe. Ebenso vorteilhaft kann die Wirkstoffverkapselung zur Verminderung der Geruchsbelästigung bei geruchsintensiven Wirkstoffen sein. Ein weiterer wichtiger Vorteil der Verkapselung besteht darin, daß dadurch eine zeitlich und mengenmäßig gesteuerte Freigabe der Wirkstoffes zu erreichen ist (Depotwirkung). Durch diesen « slow release » — Effekt kann der Wirkstoff über einen längeren Zeitraum wirksam bleiben und dadurch besser genutzt, die Zahl der erforderlichen Applikationen eingeschränkt und damit letztlich die Gesamtmenge an aufzuwendendem Wirkstoff reduziert werden. Eine Verringerung der erforderlichen Applikationen aber bedeutet durch die bessere Nutzung der Wirkstoffe neben einer Verringerung des Arbeitsaufwandes eine geringere Belastung der Umwelt durch Pflanzenschutzmittelrückstände. Verbunden mit der gesteuerten Wirstoff-Freisetzung resultiert auch ein besserer Schutz der Kulturpflanzen gegen phytotoxische Schäden.

Eine der Voraussetzungen für die praktische Nutzung dieser Technik ist die erforderliche mechanische Stabilität der Partikel. Mit den oben genannten Vorteilen ist z. B. im Pflanzenschutz aber nur dann zu rechnen, wenn die Wirkstoffträger bei der Feldapplikation durch Ausbringgeräte möglischst unbeschädigt bleiden bzw. auch bei etwaiger mechanischer Beanspruchung oder gar Beschädigung ihre anwendungsspezifischen Eigenschaften, insbesondere die Fähigkeit der langsamen Wirkstoffabgabe nicht verlieren. Die Freigabe des Wirkstoffes soll erst am Verwendungsort erfolgen, und zwar z. B. durch Diffusionsvorgänge oder langsame Zerstörung der Kapselwand. Die Diffusion des Kapselinhaltes kann z. B. durch die Dicke der Hülle bzw. der Kapselwand, durch die zusätzlich mit eingeschlossenen Lösungsmittel oder besonders durch die spezifischen Eigenschaften des die Hülle bildenden Materials beeinflußt werden. Als Wandmaterial wurden die verschiedensten synthetischen oder natürlichen Hochpolymeren eingesetzt, so z. B. Polyurethane, Polyharnstoffe, Polyamide, Polyester, Polyacrylate, Polyolefine, Cellulose-Derivate, Gelatine, Polyvinylalkohole u. a.

Jedes dieser Polymeren hat seine eigenen stoffspezifischen Kennwerte im Diffusionsverhalten sowie der chemischen Stabilität gegenüber bestimmten flüssigen oder gasförmigen Stoffen oder Stoffgemischen.

Für eine Reihe von Wirkstoffen, so z. B. für bestimmte leichtflüchtige organische Phosphorverbindungen, sind Mikrokapseln mit einer Polyamid-Hülle von besonderem Interesse. Viele Verfahren zur Mikroverkapselung solcher oder anderer Aktivsubstanzen mit Polyamiden sind bekannt und in der Literatur beschrieben worden. Fast alle nach bereits bekannten Verfahren hergestellten Mikrokapseln mit Polyamid-Hüllen haben jedoch für den praktischen Einsatz auf dem Pflanzenschutzsektor und anderen Gebieten der Technik den Nachteil unzureichender mechanischer Stabilität. Ein weiterer Nachteil der Polyamid-Mikrokapseln besteht darin, daß die Partikel leicht sedimentieren und nur schwer redispergierbar sind. Schließlich enthalten fast alle Polyamid-Mikrokapseln neben dem Füllgut noch unerwünschte Restmengen der als Ausgangskomponenten für die Kapselbildung eingesetzten Säurechloride, die z. B. mit dem Füllgut reagieren oder anderweitig zu Störungen oder Nachteilen Anlaß geben können.

Es ist bereits bekannt, Mikrokapseln mit Polyamid-Hüllen aus Di- oder Polyaminen und Säurechloriden von di- oder polyfunktionellen Säuren durch Polykondensation herzustellen. Es ist auch bekannt, hierfür Mischpolymerisate aus Polyharnstoff-Polyamid einzusetzen.

So wird z. B. in der DE-OS 2 226 941 die Herstellung eines insektiziden Mittels beschrieben, das Mikrokapseln mit Methylparathion oder Äthylparathion als Kernmaterial in einer Umhüllung bzw. Haut aus vernetztem Polyamid-Polyharnstoff enthält, wobei die Mikrokapseln im Gemisch mit einem wässrigen Träger vorliegen oder auch durch Vakuumfiltration isoliert werden können. Die Herstellung der Mikrokapseln unter Umhüllung des in wässriger Phase tröpfchenförmig dispergierten wasserunlöslichen Kernmaterials erfolgt durch Grenzflächenkondensation komplementärer Zwischenverbindungen, die unter Bildung vernetzter Polyamid-Polyharnstoff-Polykondensate reagieren, wobei der Vernetzungsgrad der Polykondensate zwischen 10 und 50 % liegt.

Die so hergestellten Polyamid-Polyharnstoff-Kapseln haben jedoch den Nachteil, daß sie sich als Dispersion beim Stehenlassen leicht von der Trägerflüssigkeit absetzen, wobei 2 oder auch 3 Schichten entstehen und die Kapseln untereinander auch leicht verkleben können. Darüber hinaus haben die Kapseln, die keine Innenstrukturen besitzen, die entscheidenden Nachteile einer nur geringen mechanischen Stabilität sowie unzureichender Druckfestigkeit, was sich z. B. bei Verwendung im Pflanzenschutz bei der Feldapplikation durch Ausbringgeräte sehr nachteilig und verlustbringend auswirken kann.

Aus der DE-OS 2 757 017 sind Mikrokapseln aus Polyurethan-Polyharnstoff mit durch Polyurethan-Polyharnstoff strukturierter Innenmasse bekannt. Ihre Herstellung erfolgt durch hydrolytische Vernetzung von Di- oder Polyisocyanatpräpolymeren, wobei letztere zusammen mit dem Kernmaterial als nicht wasserlösliche Phase in einer wäßrigen Phase suspendiert werden und das Kernmaterial ein Alkyl- und/oder Alkoxyalkylacetat als Lösungsmittelbestandteil enthält. Die so hergestellten Mikrokapseln besitzen zwar eine gute Druckbeständigkeit und zeigen auch gute Beständigkeiten bei mechanischen Beanspruchungen. Eine Schwäche liegt aber z. B. in dem bekannten nachteiligen Diffusionsverhalten von Mikrokapseln mit einer Polyurethan-Polyharstoff-Außenhülle, was bei zahlreichen empfindlichen Kernmaterialien deren Verkapselung in ein derartiges Polymermaterial verbietet.

Der vorliegenden Erfindung lag somit die Aufgabe zugrunde, die bekannten Nachteile bei den wegen ihrer vorteilhaften Diffusionseigenschaften für viele Anwendungen interessanten Mikrokapseln mit Polyamidaußenhüllen zu überwinden und druckbeständige, mechanisch belastbare Mikrokapseln mit einer aus Polyamid bestehenden Außenhülle herzustellen.

Es wurde nun überraschenderweise gefunden, daß man druckbeständige Mikrokapseln, die eine Außenhülle aus Polyamid und eine durch Polyurethan-Polyharnstoff strukturierte Innenmasse besitzen und als Kernmaterial eine mit Wasser nicht mischbare flüssige Phase und gegebenenfalls Wirkstoffe enthalten, herstellen kann, indem man eine flüssige, mit Wasser nicht mischbare Phase, die in einem organischen Lösungsmittel das für die Polyamidbildung erforderliche di- oder polyfunktionelle Säurederivat, vorzugsweise Säurehalogenid, insbesondere das Säurechlorid vorzugsweise einer di- oder polyfunktionellen Carbonsäure, sowie ein durch Vernetzung mit Wasser zur Polyurethan-Polyharnstoffbildung befähigtes Di- oder Polyisocyanat oder dessen Gemisch mit Hydroxygruppen enthaltenden organischen Verbindungen, vorzugsweise Di- oder Polyolen, oder ein Di- oder Polyisocyanatpräpolymeres sowie die gegebenenfalls einzukapselnden Wirkstoffe enthält, in der wässrigen Lösung eines Schutzkolloids, die gegebenenfalls auch oberflächenaktive Mittel enthält, dispergiert und der Dispersion wässrige Lösungen eines zur Polyamidbildung befähigten Di- oder Polyamins und Säurebindender Mittel zumischt, wobei die wässrigen Lösungen des Di- oder Polyamins bzw. des säurebindenden Mittels der wässrigen Schutzkolloidlösung auch bei der Herstellung der Dispersion beigemischt werden können, und wobei die dispergierte und mit Wasser nicht mischbare flüssige Phase ein inertes organisches aprotisches Hydrophilierungsmittel, das Wasser lösen kann, enthält und die Reaktion der Komponenten in der Dispersion vorzugsweise bei niederen Temperaturen durchgeführt wird.

Die nach erfolgter Reaktion der Komponenten gebildeten Mikrokapseln können in der resultierenden Dispersionsform verwendet oder nach üblichen Methoden, z. B. insbesondere durch Sprühtrocknung oder durch Verwendung von Entwässerungsmitteln oder durch Vakuumfiltration als trockene, rieselfähige und in Wasser leicht redispergierbare Pulver isoliert werden.

Die erfindungsgemäß hergestellten Mikrokapseln besitzen hohe Druckfestigkeiten und sind gegenüber den bei üblichen Verarbeitungs- bzw. Ausbringungsverfahren auftretenden mechanischen Beanspruchungen weitgehend verletzungsunempfindlich. Sie besitzen überraschenderweise eine aus Polyamid bestehende Außenhülle mit den vorteilhaften Diffusionseigenschaften von Polyamid und eine durch vernetztes Polyurethan-Polyharnstoffpolymerisat von schaumzellenartigem Erscheinungsbild strukturierte Innenmasse mit dem Kernmaterial. Der Beweis dafür, daß die Kapsel-Außenhüllen im wesentlichen aus Polyamid bestehen, läßt sich sehr einfach und überzeugend durch Löslichkeitsversuche mit solchen Lösungsmitteln oder Lösungsmittelgemischen erbringen, in denen Polyamide löslich, vernetzte Polyurethan-Polyharnstoffpolymerisate dagegen unlöslich sind, wie z. B. konzentrierte Ameisensäure.

Es war aufgrund des Herstellungsverfahrens keinesfalls zu erwarten, daß die bei der erfindungsgemäßen Eintopfmethode gebildeten polymeren Kapselhüllen einen andersartigen stofflichen Aufbau aufweisen als die gleichzeitig entstandenen polymeren Zellstrukturen der Innenmasse, zumal die Ausgangsbestandteile Säurechlorid und Isocyanatkomponente, ähnlich wie bei dem in der DE-OS 2 226 941 beschriebenen Verfahren, in inniger Mischung zur Reaktion gelangten. Darüber hinaus enthält das Kernmaterial der erfindungsgemäß hergestellten Mikrokapseln z. B. auch praktisch keine Restmengen von nicht umgesetzten Säurechloriden mehr, was von großem Vorteil ist.

Gegenstand der Erfindung ist somit ein Verfahren zur Herstellung von druckbeständigen Mikrokapseln mit einer aus Polyamid bestehenden Außenhülle und einer durch Polyurethan-Polyharnstoff strukturierten Innenmasse, welche eine mit Wasser nicht mischbare flüssige Phase und gegebenenfalls Wirkstoffe, vorzugsweise pestizide Wirkstoffe enthält, in einer wäßrigen Dispersion durch Dispergierung einer flüssigen, mit Wasser nicht mischbaren Phase, die in einem organischen Lösungsmittel das für die Polyamidbildung erforderliche di- oder polyfunktionelle Säurederivat, vorzugsweise Säurehalogenid, insbesondere das Säurechlorid einer di- oder polyfunktionellen Carbonsäure, ferner ein Di- oder Polyisocyanat oder dessen Gemisch mit Hydroxygruppen enthaltenden organischen Verbindungen, vorzugsweise Di- oder Polyolen, oder ein Di- oder Polyisocyanatpräpolymeres sowie gegebenenfalls die

einzukapselnden Wirkstoffe enthält, in der wäßrigen Lösung eines Schutzkolloids, die gegebenenfalls oberflächenaktive Mittel enthält, und gleichzeitige oder nachträgliche Zumischung von wäßrigen Lösungen eines Di- oder Polyamins und säurebindender Mittel sowie Reaktion der Komponenten in der Dispersion, dadurch gekennzeichnet, daß die dispergierte und mit Wasser nicht mischbare flüssige Phase ein inertes organisches aprotisches Hydrophilierungsmittel, das Wasser lösen kann, enthält.

Der Anteil an inertem organischem aprotischem Hydrophilierungsmittel in der mit Wasser nicht mischbaren flüssigen Phase kann erfindungsgemäß einen weiten Bereich umfassen. Dieser beträgt vorzugsweise 1 bis 85 Gew.-%, insbesondere 4 bis 50 Gew.-%, bezogen auf die nicht mit Wasser mischbare und zu dispergierende flüssige Phase. Auch höhere oder darunter liegende Anteile können in manchen Fällen zweckmäßig sein.

Erfindungsgemäß erfolgt die Durchführung der Kapselbildungsreaktion bevorzugt bei niederen Temperaturen, z. B. zwischen 0 und 40 °C, insbesondere zwischen 0 und 20 °C. Eine leichte Temperaturanhebung innerhalb dieses Bereiches jeweils gegen Ende des Reaktionsverlaufs kann vorteilhaft sein. Höhere Reaktionstemperaturen sind daneben aber nicht auszuschließen. Da die Reaktionsgeschwindigkeiten mit steigender Temperatur im allgemeinen stark zunehmen, kann die Qualität der entstehenden Kapseln, insbesondere der Kapselhüllen, durch einen zu raschen Reaktionsverlauf in manchen Fällen, insbesondere bei Verwendung von stark reaktiven Ausgangskomponenten, beeinträchtigt werden, so daß die erfindungsgemäße Kapselbildungsreaktion zweckmäßig und bevorzugt im Bereich niederer Temperaturen durchgeführt wird.

Als inerte organische aprotische Hydrophilierungsmittel, die Wasser lösen können, kommen z. B. Ketone, Äther oder Ester infrage. Bevorzugt sind beispielsweise aliphatische oder cycloaliphatische Ketone, Äther oder Ester, wie z. B. Aceton, Methyläthylketon, Diäthylketon, Cyclohexanon, Methylcyclohexanon, Isophoron, Diäthyläther, Diisopropyläther, Dioxan, Tetrahydrofuran, Äthylacetat, Methoxyäthylacetat, Äthoxyäthylacetat, Propylacetat, Butylacetat, Methoxybutylacetat, oder Mischungen aus diesen Verbindungen, wobei letztere sowohl in wasserfreier Form, als auch partiell oder bei Verbindungen, in denen Wasser nur begrenzt löslich ist, auch vollständig mit Wasser gesättigt zur Anwendung gelangen können. Besonders bevorzugt sind Äthylacetat und 2-Äthoxyäthylacetat.

Weitere bevorzugte inerte organische aportische Hydrophilierungsmittel sind Alkyl- oder Alkoxyalkylacetate der Formel I,

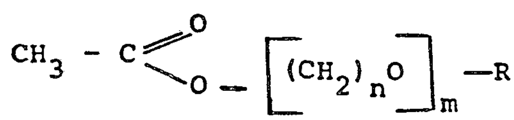

(I)

worin

m = 0, 1 oder 2, vorzugsweise 0 oder 1,

n = 1 bis 4, vorzugsweise 2 und

R = ($C_1$-$C_5$)-Alkyl bedeutet.

Weiterhin kommen als organische aprotische Hydrophilierungsmittel in Sinne der Erfindung auch aromatische, aromatisch-aliphatische, aromatisch-cycloaliphatische oder hydroaromatische Ketone, Äther oder Ester in Frage, sofern diese Wasser zu lösen vermögen und mit der zu dispergierenden, wasserunlöslichen Phase mischbar sind. Die erfindungsgemäß als hydrophilierungsmittel zu verwendenden Ketone, Äther oder Ester können auch Heteroatome enthalten.

Erfindungsgemäß werden die Komponenten für die Bildung des Polyamidkapsel-Wandmaterials so gewählt und aufeinander abgestimmt, daß eine optimale Elastizität und mechanische Stabilität der Kapselwand gegeben ist. Als dioder polyfunktionelle Säurederivate eigenen sich z. B. die Chloride der Bernsteinsäure, Glutarsäure, Pimelinsäure, Azelainsäure, Dodecandicarbonsäure, Adipinsäure, 1,3,5-Benzoltricarbonsäure oder —$SO_2Cl$-Gruppen enthaltende Verbindungen, wie 1,3-Benzol-Disulfonyldichlorid, 1,3,5-Benzoltrisulfonyltrichlorid.

Beispiele für geeignete Diamine oder Polyamine sind Äthelendiamin, Hexamethylendiamin, Diäthylentriamin, Tetraäthylenpentamin, Pentaäthylenhexamin, Piperazin, Phenylendiamin, Toluylendiamin, 2,4,6-Triaminotoluoltrihydrochlorid, 1,3,6-Triaminonaphthalin.

Beispiele für Isocyanatkomponenten sind die an sich bekannten aliphatischen, aromatischen, cycloaliphatischen oder araliphatischen Di- oder Polyisocyanate, insbesondere 2,4- und 2,6-Toluylendiisocyanat, 2,4- und 2,6-Hexahydrotoluylendiisocyanat, Diphenylmethan-4,4'-diisocyanat und höhere Homologe, Polymethylenpolyphenylisocyanat (z. B. « PAPI » der Fa. Upjohn Company), 1,4-Tetramethylendiisocyanat und 1,6-Hexamethylendiisocyanat. Als Di- oder Polyole kommen die an sich bekannten aliphatischen Di- oder Polyole, deren Umsetzungsprodukte mit Alkylenoxiden wie Äthylenoxid oder Propylenoxid, mehrwertige Alkohole sowie Polyalkylenglykole in Frage, insbesondere beispielsweise Äthylenglykol, Butylenglykole, Hexandiol-1,6, Trimethylolpropan, Glycerin, Hexantriol, Polyäthylen- und Polypropylenglykole.

Besonders gute Ergbnisse werden z. B. mit einem Isocyanat-Präpolymeren-Gemisch erhalten, welches durch Umsetzung von 2 bis 3 Mol Hexantriol-(1,2,6) oder (1,1,1)-Trimethylolpropan, 1 Mol Butandiol-(1,3) und 1 Mol Polypropylenglykol 1 000 mit 8 Mol Toluylendiisocyanat erhalten wird, wobei

ein deutlicher stöchiometrischer Unterschuß an eingesetzten Polyolen vorliegt. Als Lösungsmittel für das Isocynanat-Präpolymere eignet sich besonders ein Gemisch aus Äthylglykolacetat und Xylol in einem Gewichtsverhältnis von 5 : 1 bis 1 : 5.

Allgemein werden zur Vermeidung von Verlusten an gegebenenfalls einzukapselnden Wirkstoffen durch deren gegebenenfalls mögliche Reaktionen mit den für die Kapselbildung erforderlichen Isocyanatbestandteilen bevorzugt entsprechend reaktionsträge Di- oder Polyisocyanate oder relativ reaktionsträge Isocyanat-Präpolymere eingesetzt. Als solche Isocyanat-Präpolymere eigenen sich z. B. Umsetzungsprodukte von aliphatischen, aromatischen, cycloaliphatischen oder araliphatischen Di- oder Polyisocyanaten mit Verbindungen, die mehrere OH-Gruppen enthalten, insbesondere z. B. Di- oder Polyole, wobei die Di- oder Polyisocyanate im Überschuß eingesetzt werden, so daß die entstehenden Umsetzungsprodukte noch eine ausreichende Anzahl freier Isocynat-Gruppen enthalten und wie Polyisocyanate reagieren können, wobei das mittlere Molekulargewicht dieser Umsetzungsprodukte vorzugsweise etwa 300 bis 10 000 beträgt, (vgl. z. B. R. Vieweg, A. Höchtlen, Kunststoffhandbuch Band VII, S. 84 ff., Carl Hanser Verlag, München, 1966).

Die nach dem erfindungsgemäßen Verfahren einzusetzende, mit Wasser nicht mischbare flüssige Phase enthält die Isocyanat- bzw. Isocyanat/Di- oder Polyol- bzw. Isocyanat-Präpolymeren-Komponenten im allgemeinen in Mengen von insgesamt 0,5 bis 40 Gew.-%, vorzugsweise von 5 bis 10 Gew.-%, bezogen auf die mit Wasser nicht mischbare flüssige Phase. Diese Menge ist, vor allem nach oben hin, durch die angegebenen Werte jedoch nicht begrenzt und kann auch bis zu 70 Gew.-% betragen. Bei zu geringen Mengen an den genannten Isocyanat-Komponenten wird andererseits gegebenenfalls die gewünschte mechanische Stabilität der gebildeten Mikrokapseln nicht mehr ganz erreicht.

Die mit Wasser nicht mischbare flüssige Phase enthält außerdem das für die Polyamidbildung benötigte Säurederivat, vorzugsweise Säurehalogenid in einer solchen Menge, daß in den gebildeten Mikrokapseln das Gewichtsverhältnis des die Kapselhüllen bildenden Polyamids zu dem die Innenstrukturen bildenden Polyurethan-Polyharnstoffpolymerisat, das im Prinzip nicht kristisch und in einem weiten Bereich variabel ist, vorzugsweise etwa 10 : 1 bis 1 : 10 beträgt.

In den erfindungsgemäß hergestellten Mikrokapseln beträgt außerdem der Anteil des die Kapselhüllen sowie die Innenstrukturen bildenden Polymermaterials insgesamt vorzugsweise 5 bis 50 Gew.-%, insbesondere 12 bis 30 Gew.-%, bezogen auf das Gesamtgewicht der Mikrokapseln, ohne jedoch nach oben hin auf diesen Bereich beschränkt zu sein. Auch unterhalb dieses Bereiches liegende Werte sind prinzipiell möglich, sie können aber zu unzureichenden Kapselstabilitäten führen.

Der Rest zu 100 Gew.-% der zu dispergierenden und mit Wasser nicht mischbaren flüssigen Phase besteht gegebenenfalls aus weiteren, mit Wasser nicht mischbaren organischen Lösungsmitteln, die gegenüber Isocyanaten, Wasser und dem gegebenenfalls einzukapselnden Wirkstoff chemisch inert sind. Als solche Lösungsmittel kommen z. B. aromatische oder aliphatische Kohlenwasserstoffe, aber auch pflanzliche oder synthetische Öle oder andere, nicht bereits genannte Ester, Äther oder Ketone in Frage, insbesondere z. B. Toluol, Xylole, Methylnaphthaline, Dimethylnaphthaline, Paraffinöle, Cyclohexan, 4-Methyl-cyclohexan, Benzoesäurebenzylester, Diphenyläther, Leinöl, Baumwollsaatöl oder Silikonöl.

Der gegebenenfalls einzukapselnde Wirkstoff kann z. B. flüssig sein oder bei einer Temperatur oberhalb seines Schmelzpunktes in der flüssigen und mit Wasser nicht mischbaren Phase dispergiert werden, falls er nicht in den Lösungsmittelkomponenten der mit Wasser nicht mischbaren flüssigen Phase selbst löslich ist und dieser in entsprechender Lösung zugesetzt werden kann.

Der Wirkstoff, der bevorzugt ein pestizider Wirkstoff ist, aber ebenso z. B. ein Pharmakon oder Desinfiziens, ein Geruchsstoff, Duftstoff oder Farbstoff oder ein anderes Chemikal sein kann, das nicht mit Isocyanat, Säurehalogenid, Di- oder Polyol oder Wasser reagiert, kann in Mengenanteilen von 0,1 bis 80 Gew.-%, vorzugsweise von 1 bis 60, insbesondere von 5 bis 40 Gew.-% in der zu dispergierenden flüssigen und mit Wasser nicht mischbaren Phase enthalten sein.

Die wässrige Phase enthält im allgemeinen etwa 0,5 bis 10 Gew.-% eines Schutzkolloids, welches z. B. bevorzugt aus Cellulose-Derivaten, die wasserlöslich bzw. wasserdispergierbar sind, wie z. B. carboxymethylcellulose oder Carboxymethylhydroxyäthylcellulose, Polyvinylalkohol oder Gummiarabicum bestehen kann. Es können ferner auch nicht-ionische, anionische oder kationische oberflächenaktive Stoffe in Mengen von 0,1 bis 5 Gew.-% zugesetzt werden. Die zugesetzte Menge der hier genannten Stoffe hängt von der Art und Zusammensetzung der zu dispergierenden und mit Wasser nicht mischbaren flüssigen Phase, dem spezifischen Gewicht des zu verkapselnden Wirkstoffes, der gewünschten Mikrokapselgröße, der Reaktionstemperatur und -zeit, der Rührzeit und -geschwindigkeit bzw. der Homogenisierintensität beim Dispergiervorgang ab und kann im Einzelfall durch Vorversuche leicht ermittelt werden.

Als saürebindende Mittel zur Neutralisation z. B. des Chlorwasserstoffs, wie er bei der Polyamidbildung durch Reaktion der Säurechloride mit den Aminen in stöchiometrischen Mengen erzeugt wird, werden in bekannter Weise basische Verbindungen, vorzugsweise Alkalicarbonate oder Alkalihydroxyde oder Erdalkalihydroxyde eingesetzt. Sie werden als wässrige Lösungen vorzugsweise in Mischung mit wässrigen Lösungen der Di- oder Polyamine oder gegebenenfalls auch getrennt aber gleichzeitig mit den letzteren der wässrigen Dispersion beigemischt oder bereits bei der Herstellung der letzteren der wässrigen Schutzkolloidlösung zugesetzt oder gleichzeitig mit der wasserunlöslichen Phase beim Dispergiervorgang der wässrigen Schutzkolloidlösung beigemischt, zweckmäßig unter Kühlung auf Temperaturen zwischen etwa 0 und 20 °C.

Der Anteil an Di- oder Polyaminen in der wässrigen Phase beträgt etwa 0,1 bis 20 Gew.-%, vorzugsweise 3 bis 10 Gew.-%, bezogen auf die wässrige Phase des gesamten Reaktionsvolumens.

Bei der praktischen Durchführung des erfindungsgemäßen Verfahrens zur Verkapselung eines beliebigen Kernmaterials wird z. B. die Lösung des Isocyanat-Präpolymerengemisches mit dem gegebenenfalls zu verkapselnden Wirkstoff, dem di- oder polyvalenten Säurehalogenid, dem inerten organischen aprotischen Hydrophilierungsmittel, das teil- oder gegebenenfalls vollständig mit Wasser gesättigt sein kann, sowie den erforderlichen zusätzlichen organischen Lösungsmitteln vorgemischt und dieses Gemisch der wässrigen Phase unter Rühren zugemischt, wobei dieses Zumischen vorteilhaft in einer Zone hoher Turbulenz erfolgt. Zur Bildung einer Zone hoher Turbulenz kann man sich der allgemein gebraüchlichen technischen Vorrichtungen bedienen. Dazu gehören z. B. Rührkessel mit Intensivrührer, aber auch röhrenförmige Reaktoren mit den dafür geeigneten Rührvorrichtungen. Die Zugabe kann diskontinuierlich oder, bei Verwendung entsprechender Aggregate, auch kontinuierlich erfolgen. Auch nachgeschaltete Homogenisiervorrichtungen können vorteilhaft sein. Durch diese Verfahrensweise wird eine Dispersion der mit Wasser nicht mischbaren flüssigen Phase in der wässrigen Phase erzeugt, in der die entstandenen Tröpfchen je nach Rühr- bzw. Dispergierintensität in der gewünschten, wählbaren Größe vorliegen. Dieser Größenbereich liegt in der Regel bei einem Tröpfchendurchmesser von 1 bis 100 µm, vorzugsweise von 5 bis 20 µm. Für besondere Zwecke ist es aber auch möglich, Partikel mit einem größeren Durchmesser von z. B. 1 bis 10 mm zu erzeugen. In diesem Fall sind lediglich die technischen Vorrichtungen für die Herstellung der Dispersion entsprechend zu wählen.

Die zu dispergierende flüssige und mit Wasser nicht mischbare Phase kann einen Anteil von etwa 20 bis 70 Vol.-% am gesamten Reaktionsvolumen der Dispersion haben, wobei ein Anteil von 30 bis 60 Vol.-% bevorzugt ist.

In manchen Fällen kann es vorteilhaft sein, der kontinuierlichen wässrigen Phase der Dispersion unter starker Kühlung und Rühren die wässrige Lösung des Amins und des säurebindenden Mittels tropfenweise zuzusetzen.

Die Temperatur des Einkapselungssystems kann während des ganzen Prozesses konstant gehalten, aber auch nach bestimmten Zeitabschnitten verändert werden und sollte zweckmäßig im Bereich von 0° bis 40 °C, vorzugsweise von 0 bis 20 °C liegen. Eine leichte Temperaturanhebung innerhalb dieser Bereiche gegen Ende des Reaktionsverlaufs kann vorteilhaft sein.

Die Reaktionszeit beträgt im allgemeinen einige Minuten bis zu mehreren Stunden, insbesondere 2 bis 5 Stunden, und kann in manchen Fällen bis zur vollständigen Ausbildung der Innenstrukturen auch länger, z. B. bis zu 15 Stunden betragen. Am raschesten bildet sich im Reaktionsverlauf die Polyamidhülle, die im allgemeinen bereits nach wenigen Minuten nachweisbar ist, während für die vollständige Ausbildung der Polyurethan-Polyharnstoff-Innenstrukturen etwas längere Reaktionszeiten, vorzugsweise 2 bis 5 Stunden benötigt werden. Insbesondere bei sehr tiefen Temperaturen können in manchen Fällen auch bis zu 15 Stunden erforderlich sein.

Überraschenderweise entstehen nach dem erfindungsgemäßen Herstellungsverfahren Mikrokapseln mit stofflich definierbaren Polyamid-Hüllen, die im allgemeinen eine kugelartige Form und eine glatte Außenfläche besitzen und die im Innern durch das Kernmaterial und eine durch Vernetzungsreaktionen gebildete strukturierte Polyurethan-Polyharnstoff-Masse ausgefüllt sind. Durch diese strukturierte Innenmasse als Kernmaterial wird die Elastizität der Mikrokapseln so stark verbessert, daß die Partikel eine für Polyamidkapseln bisher nicht erreichbare, hohe Druckbeständigkeit sowie sehr vorteilhafte anwendungstechnische und verwendungsspezifische Eigenschaften besitzen.

Die Innenstrukturen der erfindungsgemäß hergestellten Partikelkörper sind je nach Herstellungsbedingungen in einem breiten Dimensionsbereich variabel. Sie können — wie z. B. durch rasterelektronenmikroskopische Aufnahmen bzw. Durch mikroskopische Betrachtungen festgestellt werden kann — im molekulardispersionsnahen Größenbereich als gel- bzw. gallertartige Micellen, oder im mikroskopischen Größenbereich schwamm- bis schaumzellenartig ausgebildet vorliegen und können auch bis zu makroskopisch sichtbaren Porenstrukturen geformt sein. Diese Strukturen beeinflussen die Elastizität und die mechanische Stabilität der enstandenen Kapseln entscheidend. Bevorzugt als Träger für Wirkstoffe, vor allem für Pflanzenschutzmittel sind die im mikroskopischen Größenbereich schwamm- oder schaumzellenartig strukturierten Mikrokapseln.

Für den Einsatz der erfindungsgemäß hergestellten Partikelkörper z. B. als Wirkstoffträger auf dem Pflanzenschutzgebiet ist es ferner von Bedeutung, daß kein Partikelbestandteil unerwünschte phytotoxische Wirkungen zeigt. Die den Pestizidwirkstoff tragenden Partikel lassen sich auch nach dem Trocknen, was nach bekannten Methoden, vorteilhafterweise z. B. durch Sprühtrocknung oder aber auch durch Verwendung von Entwässerungsmitteln oder durch Vakuumfiltration bewerkstelligt werden kann, gut zu Pflanzenschutzpräparaten formulieren. Ihre Feldapplikation ist ohne Schwierigkeiten möglich. Die strukturierte Innenmasse der Partikelkörper begünstigt u. a. die hier erwünschte Verzögerung der Wirkstoffabgabe und führt damit zu einer verbesserten Depotwirkung der verkapselten Wirkstoffe. Darüber hinaus sind die Partikel bereits wenige Stunden nach ihrer Herstellung frei von z. B. Säurechlorid-Restmengen und, je nach Herstellungsbedingungen, gegebenenfalls auch frei von überschüssiger Säure, und zwar ohne Beeinträchtigung der Wirksamkeit des eingekapselten Wirkstoffs. Durch die bei der Vernetzung der Isocyanatkomponenten durch Reaktion mit Wasser entstehenden und in der Kapsel verbleibenden feinen Gasbläschen wird unter Verringerung des spezifischen Kapselgewichtes das sonst bei Polyamidkapseln beobachtete starke Sedimentieren in wässrigen Suspensionen weitgehend unterbunden.

Die Erfindung wird durch die nachfolgenden Beispiele näher erläutert.

## Herstellungsbeispiele

### Vergleichsbeispiel 1

Herstellung von Mikrokapseln mit Polyamidhülle ohne strukturierte Innenmasse gemäß DE-OS 22 26 941, Beispiel 1.

Zur Herstellung der wäßrigen Phase werden 3 g Polyvinylalkohol ((R)Mowiol 40-88)*) in 597 g Wasser gelöst und die Lösung auf 3 °C abgekühlt.

Zur Herstellung der nicht in Wasser löslichen flüssigen Phase werden 29 g Sebacoylchlorid und 10,8 g Polymethylen-polyphenylisocyanat (« PAPI », Fa. Upjohn Company) in 200 g Toluol gelöst.

Zu der wäßrigen Phase, welche sich in einem 2 Liter Rührkolben befindet, läßt man unter starkem Rühren die ebenfalls gekühlte, nicht wasserlösliche flüssige Phase zufließen. Es bildet sich eine Suspension von fein verteilten Öltröpfchen aus nicht wasserlöslicher Phase in der wäßrigen Phase.

Anschließend setzt man der Suspension in der Kälte eine Lösung von 14,6 g Äthylendiamin, 16,6 g Diäthylentriamin und 25,5 g wasserfreies Natriumcarbonat in 200 ml Wasser zu und rührt mit einem einfachen Flügelrührer noch ca. 2 Std. bei bis zu Raumtemperatur ansteigender Temperatur, um das Material in Suspension zu halten. Die entstandenen Mikrokapseln werden isoliert und untersucht. Eine Prüfung kann z. B. dadurch erfolgen, daß man Probekapseln zwischen zwei Mikroskopobjektträgerglasplatten zusammendrückt. Die resultierenden Mikrokapseln sind äußerst druckempfindlich und brüchig und geben bei Beschädigung den Kapselinhalt sogleich vollständig frei. Die Kapseln besitzen keine strukturierte Innenmasse.

### Vergleichsbeispiel 2

Herstellung von Mikrokapseln mit Polyamidhülle ohne strukturierte Innenmasse.

Zur Herstellung der wäßrigen Phase werden insgesamt 4 g Polyvinylalkohol (2 g Mowiol 4-88**) und 2 g Mowiol 18-88***)) in 96 g Wasser gelöst und die Lösung auf 3 °C abgekühlt.

Zur Herstellung der nicht in Wasser löslichen flüssigen Phase werden 2,5 g Sebacoylchlorid in 40 g Toluol gelöst und dieser Lösung in der Kälte 5 g wassergesättigtes 2-Äthoxyäthylacetat und 5 g Äthylacetat zugesetzt. Zu der wäßrigen Phase, welche sich in einem 500 ml Reaktionskolben befindet, läßt man nun unter starkem Rühren die ebenfalls gekühlte, nicht wasserlösliche flüssige Phase zufließen. Dabei bildet sich eine Suspension von fein verteilten Öltröpfchen aus nicht wasserlöslicher Phase in der wäßrigen Phase. Die resultierende Tröpfchengröße hängt stark von den Scherkräften des Rührers ab und liegt etwa zwischen 1 µm und 50 µm. Ist die erwünschte Teilchengröße erreicht, bedarf es nur noch schwacher Rührbewegung, um die dispersen Bestandteile in Suspension zu halten. Dann versetzt man die Suspension unter Rühren, aber ohne weitere Kühlung, mit 5 g einer 10 %igen wäßrigen Hexamethylendiaminlösung sowie 1,5 g einer 20 %igen wässrigen Natriumcarbonatlösung.

Es ist zweckmäßig, die resultierende Dispersion noch einige Zeit bei bis zu Raumtemperatur ansteigender Temperatur nachzurühren. Die entstandenen Mikrokapseln können aus der Dispersion isoliert werden, z. B. durch Vakuumfiltration oder durch Sprühtrocknung. Sie sind druckempfindlich, geben bei Beschädigung den Kapselinhalt sogleich vollständig frei und besitzen keine strukturierte Innenmasse.

### Beispiel 1

Herstellung von Mikrokapseln mit Polyamidhülle und durch Polyurethan-Polyharnstoff strukturierte Innenmasse.

Zur Herstellung der wäßrigen Phase werden insgesamt 4 g Polyvinylalkohol (2 g Mowiol 4-88 und 2 g Mowiol 18-88) in 96 g Wasser gelöst und die Lösung auf 3 °C abgekühlt.

Zur Herstellung der nicht in Wasser löslichen flüssigen Phase werden 2,5 g Sebacoylchlorid in 40 g Toluol gelöst und der Lösung 5 g 2-Äthoxyäthylacetat, 5 g wassergesättigtes Äthylacetat und 7 g der

*) (R)Mowiol 40-88 : Polyvinylalkohol als Verseifungsprodukt von Polyvinylacetat (Verseifungsgrad : 87,7 ± 1,0 %), Viskosität (bezogen auf die 4 %ige wäßrige Lösung) : 40 ± 2 cP.

**) Mowiol 4-88 = Polyvinylalkohol als Verseifungsprodukt von Polyvinylacetat (Verseifungsgrad : 87,7 ± 1,0 %), Viskosität (bezogen auf die 4 %ige wäßrige Lösung) : 4 ± 0,5 cP

***) Mowiol 18-88 = Polyvinylalkohol als Verseifungsprodukt von Polyvinylacetat (Verseifungsgrad : 87,7 ± 1,0 %), Viskosität (bezogen auf die 4 %ige wäßrige Lösung) : 18 ± 1,5 cP.

50 %igen Lösung eines Präpolymerengemisches, welches durch Umsetzung von 8 Mol Toluylendiisocyanat (Isomerenverhältnis 2,4 : 2,6 = 80 : 20) mit Hexantriol-1,2,6, Butandiol-1,3 und Polypropylenglykol 1 000 in Molmengen von 3 : 1 : 1 erhalten wurde, zugesetzt. Als Lösungsmittel für das Präpolymerengemisch dient ein Gemisch aus 2-Äthoxyäthylacetat und Xylol im Gewichtsverhältnis 1 : 3. Die nicht wasserlösliche flüssige Phase wird in der Kälte in der wäßrigen Phase dispergiert und danach sofort bei ca. 3 °C unter Rühren mit 5 g einer 10 %igen wäßrigen Hexamethylendiamin-Lösung und 1,5 g einer 20 %igen wässrigen Natriumcarbonat-Lösung versetzt. Nach weiterem ca. 3-stündigem Rühren bei bis zu Raumtemperatur ansteigender Temperatur werden die Mikrokapseln isoliert und untersucht.

Wie das Beispiel zeigt, beginnt die Kapselbildung sogleich nach dem Vermischen der Komponenten in der Dispersion. Die Druckbeständigkeit der sich bildenden Mikrokapseln ist aber z. B. nach 10 Minuten Reaktionszeit zunächst noch gering, nimmt aber im Laufe der Zeit deutlich zu und erreicht nach 3-5 Stunden die gewünschten Werte. Temperaturerhöhung gegen Ende der Reaktion beschleunigt den Reaktionsablauf der Kapselbildung. Nach entsprechender Zeit hat sich eine deutlich strukturierte Innenmasse aus Polyurethan-Polyharnstoff gebildet, die sich über den gesamten Kapsel-Innenraum erstreckt und der Kapsel die gewünschte Druckfestigkeit und mechanische Stabilität verleiht. Wie Löslichkeitsversuche in konz. Ameisensäure zeigen, bestehen die Kapselhüllen der resulteirenden Mikrokapseln im wesentlichen aus Polyamid, das sich in konz. Ameisensäure löst, während sich die Polyurethan-Polyharnstoff-Innenstrukturen nicht in konz. Ameisensäure auflösen.

## Beispiel 2

Herstellung von Mikrokapseln mit Polyamidhülle und schwächer ausgeprägter Polyurethan-Polyharnstoff-Innenstruktur.

Es wird analog Beispiel 1 verfahren, jedoch mit dem Unterschied, daß der nicht in Wasser löslichen flüssigen Phase nur 3 g der 50 %igen Lösung des in Beispiel 1 genannten Präpolymerengemisches zugesetzt werden. Wie REM-Aufnahmen zeigen, erstrecken sich die so entstandenen, jedoch weniger stark ausgeprägten Innenstrukturen ebenfalls über den gesamten Kapsel-Innenraum.

Gegenüber den Kapseln der Vergleichsbeispiele 1 und 2 besitzen die hier resultierenden Mikrokapseln eine erheblich größere Druckfestigkeit und bessere mechanische Stabilität. Wie Löslichkeitsversuche in konz. Ameisensäure zeigen, bestehen die Kapselhüllen der resultierenden Mikrokapseln im wesentlichen aus Polyamid, das sich in konz. Ameisensäure löst, während sich die Polyurethan-Polyharnstoff-Innenstrukturen nicht in konz. Ameisensäure auflösen.

## Beispiel 3

Verkapselung eines insektiziden Phosphoresters.

Es wird analog dem Beispiel 1 durch Lösen von 4 g Polyvinylalkohol (2 g Mowiol 4-88 und 2 g Mowiol 18-88) in 96 g Wasser die wäßrige Phase gebildet.

Die nicht wasserlösliche flüssige Phase besteht aus 2,5 g Sebacoylchlorid, 20 g Toluol, 20 g Heptenophos*), 5 g wassergesättigtes Äthylacetat, 5 g 2-Äthoxyäthylacetat und 5 g der 50 %igen Lösung des in Beispiel 1 genannten Präpolymerengemisches. Im übrigen wird bei der Kapselherstellung wie in Beispiel 1 verfahren.

Nach einer Reaktionszeit in der Kälte von 4-5 Stunden unter Rühren bei am Ende bis zu Raumtemperatur ansteigenden Temperaturen wird die Kapselsuspension noch 10-12 Stunden bei Raumtemperatur nachgerührt. Anschließend werden die Partikel durch Sprühtrocknung isoliert.

Es werden 48 g eines rieselfähigen, aus druckfesten Mikrokapseln bestehenden Pulvers mit einem Schütt- bzw. Rüttelgewicht von 40 bzw. 45,5 g pro 100 ml erhalten, welches 40 Gew.-% Heptenophos eingeschlossen enthält. Wie Löslichkeitsversuche in konz. Ameisensäure zeigen, bestehen die Kapselhüllen der resultierenden Mikrokapseln im wesentlichen aus Polyamid, während ihre Innenstrukturierung aus unlöslichem Polyurethan-Polyharnstoffpolymerisat besteht.

## Beispiel 4

Verkapselung eines insektiziden Phosphoresters.

Es wird analog dem Beispiel 1 durch Lösen von 1,5 g Mowiol 18-88 und 3 g Gummiarabicum in 95,5 g Wasser die wäßrige Phase gebildet.

Die nicht wasserlösliche flüssige Phase besteht aus 5 g Benzoltricarbonsäuretrichlorid, 15 g Triazophos**), 5 g Toluol, 5 g Äthylacetat, 5 g wassergesättigtem 2-Äthoxyäthylacetat und 8 g der 50 %igen Lösung des in Beispiel 1 genannten Präpolymerengemisches. Im übrigen wird die Kapselherstellung

*) Heptenophos = 7-Chlor-bicyclo [3,2,0]-hepta-2,6-dien-6-yl-dimethylphosphat

**) Triasophos = 0,0-Diäthyl-(1-phenyl-1,2,4-triazol-3-yl)-thionophosphat

wie in Beispiel 1 beschrieben durchgeführt und die resultierenden Mikrokapselpartikel werden durch Sprühtrocknung isoliert. Die Ausbeute und die Eigenschaften der Partikel sind analog dem Ergebnis von Beispiel 3.

Beispiel 5

Verkapselung eines Insektenlockstoffes.

Es wird analog dem Beispiel 1 durch Lösen von 1 g Mowiol 40-88 und 2 g Gummiarabicum in 97 g Wasser die wäßrige Phase gebildet.

Die nicht wasserlösliche flüssige Phase besteht aus 3 g Sebacoylchlorid, 5 g Disparlure [(Z)-7,8-Epoxy-2-methyl-octadecan], 10 g Toluol, 5 g Äthylacetat, 5 g 2-Äthoxyäthylacetat und 5 g der 50 %igen Lösung des in Beispiel 1 genannten Präpolymerengemisches. Die Kapselherstellung wird im übrigen wie in Beispiel 1 beschrieben durchgeführt, jedoch mit der Variante, daß die Dispersion der nicht wasserlöslichen flüssigen Phase in der wäßrigen Phase mit 3 g einer 10 %igen wäßrigen Diäthylentriamin Lösung und 1,2 g einer 10 %igen wässrigen Natriumcarbonat-Lösung versetzt wird. Nach dem Sprühtrocknen der erhaltenen Kapselsuspension werden 28 g eines leicht rieselfähigen, aus druckfesten Mikrokapseln bestehenden Pulvers erhalten. Der mittlere Teilchendurchmesser liegt bei ca. 10 µm.

Wie Löslichkeitsversuche in konz. Ameisensäure zeigen, bestehen die Kapselhüllen der resultierenden Mikrokapseln im wesentlichen aus Polyamid, während ihre Innenstrukturierung aus unlöslichem Polyurethan-Polyharnstoffpolymerisat besteht.

**Ansprüche**

1. Verfahren zur Herstellung von druckbeständigen Mikrokapseln mit einer aus Polyamid bestehenden Außenhülle und einer durch Polyurethan-Polyharnstoff strukturierten Innenmasse, welche eine mit Wasser nicht mischbare flüssige Phase und gegebenenfalls Wirkstoffe enthält, in einer wäßrigen Dispersion durch Dispergierung einer flüssigen, mit Wasser nicht mischbaren Phase, die in einem organischen Lösungsmittel das für die Polyamidbildung erforderliche di- oder polyfunktionelle Säurederivat, ferner ein Di- oder Polyisocyanat oder dessen Gemisch mit Hydroxygruppen enthaltenden organischen Verbindungen oder ein Di- oder Polyisocyanatpräpolymeres sowie gegebenfalls die einzukapselnden Wirkstoffe enthält, in der wäßrigen Lösung eines Schutzkolloids, die gegebenenfalls oberflächenaktive Mittel enthält, und gleichzeitige oder nachträgliche Zumischung von wäßrigen Lösungen eines Di- oder Polyamins und säurebindender Mittel sowie Reaktion der Komponenten in der Dispersion, dadurch gekennzeichnet, daß die dispergierte und mit Wasser nicht mischbare flüssige Phase ein inertes organisches aprotisches Hydrophilierungsmittel, das Wasser lösen kann, enthält.

2. Verfahren nach Anspruch 1, dadurch gekennzeichnet, daß als di- oder polyfunktionelles Säurederivat ein Säurechlorid einer di- oder polyfunktionellen Carbonsäure eingesetzt wird.

3. Verfahren nach Ansprüchen 1 und 2, dadurch gekennzeichnet, daß als Hydroxygruppen enthaltende organische Verbindungen ein Di- oder Polyol eingesetzt wird.

4. Verfahren nach Ansprüchen 1 bis 3, dadurch gekennzeichnet, daß die Reaktion der Komponenten in der Dispersion bei niederen Temperaturen, vorzugsweise bei 0 bis 40 °C, insbesondere bei 0 bis 20 °C erfolgt.

5. Verfahren nach Ansprüchen 1 bis 4, dadurch gekennzeichnet, daß die mit Wasser nicht mischbare flüssige Phase, bezogen auf diese Phase, 1 bis 85 Gew.-% vorzugsweise 4 bis 50 Gew.-% an inertem organischem aprotischem Hydrophilierungsmittel enthält.

6. Verfahren nach Ansprüchen 1 bis 5, dadurch gekennzeichnet, daß als inerte organische aprotische Hydrophilierungsmittel Ketone, Äther, Ester oder deren Gemische eingesetzt werden.

7. Verfahren nach Ansprüchen 1 bis 6, dadurch gekennzeichnet, daß als inerte organische aprotische Hydrophilierungsmittel Alkyl- oder Alkoxyalkylacetate der Formel I

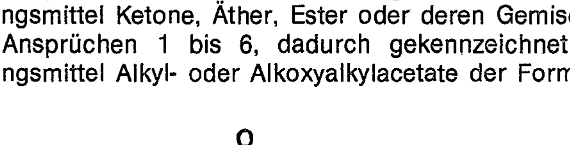

worin

m = 0, 1 oder 2

n = 1 bis 4

R = ($C_1$-$C_5$) Alkyl bedeutet,

eingesetzt werden.

8. Verfahren nach Ansprüchen 1 bis 7, dadurch gekennzeichnet, daß der Anteil der mit Wasser nicht mischbaren flüssigen Phase 20 bis 70 Vol.-% vorzugsweise 20 bis 60 Vol.-% bezogen auf das gesamte Reaktionsvolumen der Dispersionen, beträgt.

9. Verfahren nach Ansprüchen 1 bis 8, dadurch gekennzeichnet, daß die wäßrige Phase, bezogen auf diese Phase, 0,5 bis 10 Gew.-% Schutzkolloid enthält.

10. Verfahren nach Ansprüchen 1 bis 9, dadurch gekennzeichnet, daß der Anteil an Wirkstoff in der mit Wasser nicht mischbaren flüssigen Phase 0,1 bis 80 Gew.-% vorzugsweise 1 bis 60 Gew.-% und insbesondere 5 bis 40 Gew.-% beträgt.

11. Verfahren nach Ansprüchen 1 bis 10, dadurch gekennzeichnet, daß der Wirkstoff ein pestizider Wirkstoff ist.

12. Verfahren gemäß Ansprüchen 1 bis 11, dadurch gekennzeichnet, daß als Di- oder Polyisocyanatpräpolymeres ein isocyanatpräpolymeren-Gemisch eingesetzt wird, das durch Umsetzung von 2 bis 3 Mol Hexantriol-(1,2,6) oder (1,1,1)-Trimethylolpropan, 1 Mol Butandiol-(1,3) und 1 Mol Polypropylenglykol 1 000 mit 8 Mol Toluylendiisocyanat erhalten wird.

13. Verfahren nach Ansprüchen 1 bis 12, dadurch gekennzeichnet, daß der Tröpfchendurchmesser der dispergierten und mit Wasser nicht mischbaren flüssigen Phase 1 bis 100 µm, vorzugsweise 5 bis 20 µm, beträgt.

**Claims**

1. A process for the manufacture of pressure-resistant microcapsules which have a shell comprising polyamide and a polyurethane-polyurea-structured inner mass, which contains a water-immiscible liquid phase and, if desired, active compounds in an aqueous dispersion by dispersing a liquid, water-immiscible phase which contains, in an organic solvent, the difunctional or polyfunctional acid derivative required for polyamide formation as well as a diisocyanate or polyisocyanate or mixture thereof with organic compounds containing hydroxyl groups or a diisocyanate or polyisocyanate prepolymer and the active compounds optionally to be encapsulated, in an aqueous solution of a protective colloid, which contains, if appropriate, surface-active agents, and simultaneously or subsequently admixing aqueous solutions of a diamine or polyamine and acid-binding agents, and reacting the components in the dispersion, wherein the dispersed and water-immiscible liquid phase contains an inert organic aprotic hydrophilizing agent which can dissolve water.

2. A process as claimed in claim 1, wherein the difunctional or polyfunctional acid derivative required for polyamide formation is an acid chloride of a difunctional or polyfunctional carboxylic acid.

3. A process as claimed in claims 1 and 2, wherein the organic compounds containing hydroxyl groups are diols or polyols.

4. A process as claimed in any of claims 1 to 3, wherein the reaction of the components in the dispersion is carried out at low temperatures, preferably at 0 to 40 °C, in particular at 0 to 20 °C.

5. A process as claimed in any of claims 1 to 4, wherein the water-immiscible liquid phase contains, relative to this phase, 1 to 85 % by weight, preferably 4 to 50 % by weight, of an inert organic aprotic hydrophilizing agent.

6. A process as claimed in any of claims 1 to 5, wherein ketones, ethers, esters or mixtures thereof are employed as the inert organic aprotic hydrophilizing agents.

7. A processs as claimed in any of claims 1 to 6, wherein the inert organic aprotic hydrophilizing agents are acetic acid alkyl- or alkoxyalkyl esters of the formula I

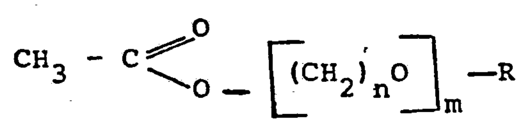

(I)

wherein

m denotes 0, 1 or 2
n denotes 1 to 4
R denotes ($C_1$-$C_5$) alkyl.

8. A process as claimed in any of claims 1 to 7, wherein the proportion of water-immiscible liquid phase is 20 to 70 % by volume, preferably 20 to 60 % by volume, relative to the total reaction volume of the dispersion.

9. A process as claimed in any of claims 1 to 8, wherein the aqueous phase contains, relative to this phase, 0.5 to 10 % by weight of protective colloid.

10. A process as claimed in any of claims 1 to 9, wherein the proportion of active compound in the water-immiscible liquid phase is 0.1 to 80 % by weight, preferably 1 to 60 % and in particular 5 to 40 % by weight.

11. A process as claimed in any of claims 1 to 10, wherein the active compound is a pesticidal active compound.

12. A process as claimed in any of claims 1 to 11, wherein the diisocyanate or polyisocyanate prepolymer is a mixture of isocyanate prepolymers obtained by reacting 2 to 3 moles hexane-1,2,6-triol or (1,1,1)-Trimethylolpropane, 1 mole butane-1,3-diol and 1 mole polypropyleneglycol 1,000 with 8 moles of toluylene diisocyanate.

13. A process as claimed in any of claims 1 to 12, wherein the droplet diameter of the dispersed water-immiscible liquid phase is 1 to 100 μm, preferably 5 to 20 μm.

## Revendications

1. Procédé de préparation de microcapsules résistant à la compression, avec une gaine extérieure en polyamide et une masse intérieure, structurée par du polyuréthanne-polyurée, qui contient une phase liquide non miscible à l'eau et éventuellement des matières actives, dans une dispersion aqueuse, par dispersion, dans la solution aqueuse d'un colloïde protecteur contenant éventuellement des substances tensioactives, d'une phase liquide, non miscible à l'eau, qui contient dans un solvant organique le dérivé de di- ou polyacide nécessaire à la formation du polyamide, et de plus un di- ou polyisocyanate ou son mélange avec des composés organiques contenant des groupes hydroxy ou un prépolymère di- ou polyisocyanate, et éventuellement les matières actives à encapsuler, et addition, simultanément ou après coup, de solutions aqueuses d'une di- ou polyamine et de produits fixant les acides, ainsi que réaction des composants dans la dispersion, caractérisé en ce que la phase liquide, dispersée et non miscible à l'eau contient un agent d'hydrophilisation inerte, organique et aprotique, qui peut séparer l'eau.

2. Procédé selon la revendication 1, caractérisé en ce que l'on utilise en tant que dérivé de di- ou polyacide un chlorure d'un acide di- ou polycarboxylique.

3. Procédé selon l'une des revendications 1 ou 2, caractérisé en ce que l'on utilise en tant que composés organiques contenant des groupes hydroxy un di- ou polyol.

4. Procédé selon l'une des revendications 1 à 3, caractérisé en ce que la réaction des composants dans la dispersion se déroule à basse température, de préférence à 0 à 40 °C, en particulier à 0 à 20 °C.

5. Procédé selon l'une des revendications 1 à 4, caractérisé en ce que la phase liquide non miscible à l'eau contient, sur la base de cette phase, 1 à 85 % en poids, de préférence 4 à 50 % en poids d'un agent d'hydrophilisation inerte, organique et aprotique.

6. Procédé selon l'une des revendications 1 à 5, caractérisé en ce que l'on utilise en tant qu'agents d'hydrophilisation inertes, organiques et aprotiques des cétones, des éthers, des esters ou leurs mélanges.

7. Procédé selon l'une des revendications 1 à 6, caractérisé en ce que l'on utilise en tant qu'agents d'hydrophilisation des acétates d'alkyle ou d'alcoxyalkyle de formule I

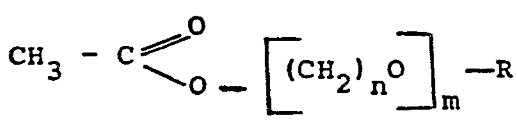

(I)

où

m = 0, 1 ou 2 ;

n = 1 à 4 ;

R est un radical alkyle à 1 à 5 atomes de carbone.

8. Procédé selon l'une des revendications 1 à 7, caractérisé en ce que le pourcentage de la phase liquide non miscible à l'eau est, par rapport au volume réactionnel total de la dispersion, de 20 à 70 % en volume, de préférence de 20 à 60 % en volume.

9. Procédé selon l'une des revendications 1 à 8, caractérisé en ce que la phase aqueuse contient, sur la base de cette phase, 0,5 à 10 % en poids de colloïde protecteur.

10. Procédé selon l'une des revendications 1 à 9, caractérisé en ce que la teneur de la phase liquide non miscible à l'eau en la matière active est de 0,1 à 80 % en poids, de préférence de 1 à 60 % en poids et en particulier de 5 à 40 % en poids.

11. Procédé selon l'une des revendications 1 à 10, caractérisé en ce que la matière active est une matière active pesticide.

12. Procédé selon l'une des revendications 1 à 11, caractérisé en ce que l'on utilise en tant que prépolymère di- ou polyisocyanate un mélange de prépolymères isocyanates, qui est obtenu par la réaction de 2 à 3 moles d'hexanetriol-1,2,6 ou de triméthylol-1,1,1 propane, 1 mole de butanediol-1,3 et une mole de polypropylèneglycol 1000 sur 8 moles de diisocyanatotoluène.

13. Procédé selon l'une des revendications 1 à 12, caractérisé en ce que le diamètre des gouttelettes de la phase dispersée liquide et non miscible à l'eau est de 1 à 100 μm, de préférence de 5 à 20 μm.